(19) Europäisches Patentamt / European Patent Office / Office européen des brevets

(11) **EP 4 354 367 A1**

(12) **DEMANDE DE BREVET EUROPEEN**

(43) Date de publication:
**17.04.2024 Bulletin 2024/16**

(21) Numéro de dépôt: **23203629.3**

(22) Date de dépôt: **13.10.2023**

(51) Classification Internationale des Brevets (IPC):
**G06Q 10/04** (2023.01)   **G06Q 10/0631** (2023.01)
**G06Q 50/06** (2024.01)   **F24D 19/10** (2006.01)
**F24H 15/144** (2022.01)

(52) Classification Coopérative des Brevets (CPC):
**F24D 19/1051; F24D 19/1063; F24H 15/144;**
**G06Q 10/04; G06Q 10/0631; G06Q 50/06**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **13.10.2022 FR 2210528**

(71) Demandeur: **Electricité de France**
**75008 Paris (FR)**

(72) Inventeurs:
• **HOFMANN, Guillaume**
**75012 PARIS (FR)**
• **CHARPENTIER, Philippe**
**78830 BULLION (FR)**

(74) Mandataire: **Regimbeau**
**20, rue de Chazelles**
**75847 Paris Cedex 17 (FR)**

(54) **PROCÉDÉ DE GÉNÉRATION D'UN CLASSIFICATEUR D'UN SYSTÈME D'EAU CHAUDE SANITAIRE**

(57)    L'invention concerne un procédé de génération d'un classificateur pour classifier un système d'eau chaude sanitaire raccordé à un point de livraison d'un réseau de distribution électrique, le classificateur (200) étant configuré pour :
- mettre en oeuvre une fonction d'encodage (102) associant à une série temporelle de valeurs de puissance électrique consommée (X) mesurées au point de livraison, une représentation compressée (Z) de la série temporelle de valeurs de puissance électrique, et
- attribuer une classe au système d'eau chaude sanitaire en fonction de la représentation compressée de la série temporelle de valeurs de puissance électrique consommée à l'aide d'un arbre de décision ou une combinaison d'arbres de décision (109).

FIG. 5

EP 4 354 367 A1

# EP 4 354 367 A1

**Description**

## DOMAINE DE L'INVENTION

L'invention concerne un procédé de génération d'un classificateur d'un système d'eau chaude sanitaire raccordé à un point de livraison d'un réseau de distribution électrique.

## ETAT DE LA TECHNIQUE

Certaines habitations sont équipées d'un système d'eau chaude sanitaire (ECS) électrique comprenant un ballon d'eau chaude à accumulation. Les ballons d'eau chaude à accumulation comprennent généralement un réservoir d'eau et une résistance chauffante utilisant de l'énergie électrique pour maintenir l'eau du réservoir à une température prédéfinie, généralement comprise dans une plage allant de 50 à 60 degrés Celsius.

Un avantage de ces installations d'eau chaude sanitaire électrique est qu'elles peuvent être conçues pour chauffer l'eau prioritairement ou uniquement pendant les « heures creuses », c'est-à-dire pendant les périodes où le réseau de distribution électrique est le moins sollicité.

Cela permet au consommateur qui ont souscrit à un contrat avec l'option « heures creuses », de bénéficier d'une énergie électrique à un tarif « heure creuse » plus avantageux.

Mais cela permet surtout de réguler la demande globale d'électricité tout au long de la journée, en incitant les consommateurs ayant souscrit ce type de contrat, à favoriser les heures creuses pour l'activation de leurs équipements électriques, notamment le système d'eau chaude sanitaire électrique. Ainsi, il est possible de réduire globalement les pics de consommation d'énergie électrique et par conséquent, de limiter le risque d'engorgement du réseau de distribution électrique.

Afin de faire en sorte qu'un système d'eau chaude sanitaire électrique soit activé uniquement pendant les heures creuses, il est possible de commander le système d'eau chaude sanitaire électrique grâce à un signal de commande (généralement appelé « signal heures creuses »). Ce signal de commande est un signal électrique émis par le gestionnaire du réseau de distribution d'énergie électrique et se propageant sur le réseau de distribution d'énergie électrique. Le signal de commande est par exemple constitué d'impulsions électriques à une fréquence de 75 Hz, émis pendant les heures creuses, mais pas pendant les heures pleines. Le système d'eau chaude sanitaire électrique est alors « asservi » au signal de commande.

Cependant, il existe des cas dans lesquels l'asservissement du système d'eau chaude sanitaire électrique n'est pas utilisé, ou ne fonctionne pas correctement.

Ces systèmes d'eau chaude sanitaire électrique « non asservis » participent à générer des pointes de consommation d'énergie électrique et obligent par conséquent les opérateurs de réseaux de distribution électrique à surdimensionner les équipements du réseau ou à prévoir des équipements de production électrique complémentaires, afin d'éviter des coupures de courant.

## RESUME DE L'INVENTION

Un but de l'invention est de proposer une solution pour permettre une identification automatique des points de livraison qui sont reliés à des systèmes d'eau chaude sanitaires non-asservis.

En effet, l'identification de ces points de livraison peut permettre de déclencher des opérations de maintenance ciblées sur les points de livraison identifiés, afin de rétablir l'asservissement du système d'eau chaude sanitaire électrique, ou de proposer l'installation d'un tel asservissement.

Ce but est atteint dans le cadre de la présente invention grâce à un procédé de génération d'un classificateur pour classifier un système d'eau chaude sanitaire raccordé à un point de livraison d'un réseau de distribution électrique,

le procédé de génération étant mise en oeuvre à partir d'un ensemble de données d'apprentissage comprenant une pluralité d'exemples, chaque exemple comprenant, pour un point de livraison donné, une série temporelle de valeurs de puissance électrique moyenne consommée mesurées au point de livraison, chaque valeur de puissance électrique moyenne consommée mesurée étant associée à une date et une plage horaire de consommation, et une valeur connue d'une classe à laquelle appartient le système d'eau chaude sanitaire du point de livraison,
le procédé comprenant des étapes de :

- générer une fonction d'encodage associant à chaque série temporelle de valeurs de puissance électrique consommée mesurées, une représentation compressée de la série temporelle de valeurs de puissance électrique,
- générer une fonction de classification associant à chaque représentation compressée, une valeur estimée de la classe à laquelle appartient le système d'eau chaude sanitaire du point de livraison,

- générer une fonction de décodage associant à chaque représentation compressée, une série temporelle de valeurs de puissance consommée reconstruite,
- mettre à jour des paramètres de la fonction d'encodage en fonction d'une première erreur entre la valeur estimée de la classe à laquelle appartient le système d'eau chaude sanitaire du point de livraison et la valeur connue de la classe à laquelle appartient le système d'eau chaude sanitaire du point de livraison, et d'une deuxième erreur entre la série temporelle de valeurs de puissance moyenne consommée reconstruite et la série de valeurs de puissance moyenne consommée mesurées au point de livraison, et
- générer un arbre de décision ou une combinaison d'arbres de décision propre(s) à attribuer une classe à un système d'eau chaude sanitaire raccordé à un point de livraison du réseau de distribution électrique en fonction d'une représentation réduite d'une série temporelle de valeurs de puissance électrique consommée mesurées au point de livraison, la représentation réduite ayant été obtenue par la fonction d'encodage à partir d'une série temporelle de valeurs de puissance électrique consommée mesurées au point de livraison.

Le procédé proposé permet d'obtenir un classificateur utilisant une représentation réduite d'une série temporelle comme données d'entrée d'un arbre de décision ou d'une combinaison d'arbres de décision.

L'utilisation d'arbres de décision permet de limiter le temps de calcul nécessaire pour classer un point de livraison, tout en présentant une fiabilité élevée.

Le procédé proposé peut en outre présenter les caractéristiques suivantes :

- le procédé comprend en outre une étape de mettre à jour des paramètres de la fonction de décodage, qui est exécutée simultanément à l'étape de mettre à jour les paramètres de la fonction d'encodage ;
- le procédé comprend en outre une étape de mettre à jour des paramètres de la fonction de classification, qui est exécutée simultanément à l'étape de mettre à jour les paramètre de la fonction d'encodage ;
- la classe à laquelle appartient le système d'eau chaude sanitaire du point de livraison est sélectionnée parmi :

    une première classe regroupant les systèmes d'eau chaude sanitaire non-électriques, une deuxième classe regroupant les systèmes d'eau chaude sanitaire électriques non-asservis par un signal de pilotage transmis par le réseau de distribution électrique au point de livraison, et
    une troisième classe regroupant les systèmes d'eau chaude sanitaire électrique asservis par un signal de pilotage transmis par le réseau de distribution électrique au point de livraison ;

- l'arbre de décision ou la combinaison d'arbres de décision est propre à attribuer une classe à un système d'eau chaude sanitaire raccordé à un point de livraison du réseau de distribution électrique, en fonction d'une représentation compressée de la série temporelle de valeurs de puissance électrique consommée mesurées au point de livraison générée par la fonction d'encodage, et d'une ou plusieurs valeurs caractéristiques calculées à partir de la série temporelle de valeurs de puissance électrique consommée mesurées au point de livraison ;
- la ou les valeur(s) caractéristique(s) est(sont) choisie(s) parmi :

    un nombre de postes horosaisonniers du point de livraison, et/ou une valeur de puissance électrique maximale pouvant être fournie par le réseau de distribution électrique au point de livraison, et/ou
    un identifiant du mois de l'année associé à la série temporelle de valeurs de puissance électrique, et/ou
    une valeur d'écart-type, une valeur moyenne, une valeur médiane, une valeur de quartile d'ordre 1, une valeur de quartile d'ordre 3, une valeur de décile d'ordre 1, une valeur de décile d'ordre 9, une valeur maximale, une valeur minimale, une valeur de coefficient de variation, une valeur de coefficient d'asymétrie, une valeur de coefficient d'aplatissement, une différence entre la valeur absolue de la valeur maximale et la valeur absolue de la valeur minimale, une valeur de rapport entre la valeur moyenne et la valeur maximale, et/ou des valeurs moyennes robustes de la série temporelle de valeurs de puissance électrique, et/ou
    une valeur d'écart-type, une valeur moyenne, une valeur médiane, une valeur de quartile d'ordre 1, une valeur de quartile d'ordre 3, une valeur de décile d'ordre 1, une valeur de décile d'ordre 9, une valeur maximale, une valeur minimale, une valeur de coefficient de variation, une valeur de coefficient d'asymétrie, une valeur de coefficient d'aplatissement, une différence entre la valeur absolue de la valeur maximale et la valeur absolue de la valeur minimale, une valeur de rapport entre la valeur moyenne et la valeur maximale, et/ou des valeurs moyennes robustes d'une série temporelle dérivée de valeurs de puissance électrique, chaque valeur de la série temporelle dérivée étant associée à une date et une plage horaire de consommation, et étant obtenue comme une différence entre la valeur de puissance électrique moyenne consommée mesurée associée à la date et à la plage horaire, et une valeur de puissance électrique moyenne consommée mesurée associée à une date et une plage horaire antérieure qui précède immédiatement la plage horaire, et/ou

des valeurs de coefficients d'une fonction d'auto-corrélation partielle de la série temporelle de valeurs de puissance électrique ;

- le classificateur est également propre à calculer une valeur d'indice de confiance associée à la classe attribuée au système d'eau chaude sanitaire ;
- le classificateur est propre à attribuer plusieurs classes à un même système d'eau chaude sanitaire d'un point de livraison à partir de plusieurs séries temporelles de valeurs de puissance électrique consommée mesurées au point de point de livraison, et à sélectionner une classe finale en fonction des différentes classes attribuées au système d'eau chaude sanitaire ;
- le classificateur sélectionne la classe finale en fonction des valeurs d'indice de confiance associées aux différentes classes attribuées au système d'eau chaude sanitaire ;
- chaque série temporelle de valeurs de puissance électrique comprend une pluralité de valeurs de puissance électrique espacées avec un pas de temps de 30 minutes entre deux valeurs de de puissance électrique successives, sur une durée de 7 jours ;
- l'arbre de décision ou la combinaison d'arbres de décision est généré par un apprentissage automatique à renforcement de gradient ;
- le procédé comprend des étapes préalables de :

  collecter pour chaque point de livraison, une série temporelle de valeurs de puissance électrique moyenne consommée mesurées au point de livraison, et
  transmettre les valeurs de puissance électrique moyenne consommée mesurées à un centre de collecte de données.

L'invention concerne également un produit programme d'ordinateur comprenant des instructions de code de programme pour l'exécution des étapes du procédé tel que défini précédemment, lorsque ce programme est exécuté par un ordinateur.

L'invention concerne en outre une mémoire lisible par ordinateur stockant des instructions exécutables par l'ordinateur pour l'exécution des étapes du procédé tel que défini précédemment.

L'invention concerne en outre un classificateur pour classifier un système d'eau chaude sanitaire raccordé à un point de livraison d'un réseau de distribution électrique, à partir d'une ou plusieurs série(s) temporelle(s) de valeurs de puissance électrique moyenne consommée mesurées au point de livraison, chaque valeur de puissance électrique moyenne consommée mesurée étant associée à une date et une plage horaire de consommation, le classificateur étant configuré pour :

- mettre en oeuvre une fonction d'encodage associant à chaque série temporelle de valeurs de puissance électrique consommée mesurées, une représentation compressée de la série temporelle de valeurs de puissance électrique, et
- attribuer une classe au système d'eau chaude sanitaire en fonction de la représentation compressée de la série temporelle de valeurs de puissance électrique consommée à l'aide d'un arbre de décision ou une combinaison d'arbres de décision.

## PRESENTATION DES DESSINS

D'autres caractéristiques et avantage ressortiront encore de la description qui suit, laquelle est purement illustrative, et non limitative, et doit être lue en regard des figures annexées, parmi lesquelles :

- la figure 1 représente de manière schématique un point de livraison d'un réseau de distribution électrique, le point de livraison étant relié à un système d'eau chaude sanitaire électrique,
- la figure 2A représente de manière schématique un premier exemple d'une série de valeurs de puissance électrique moyenne consommée mesurées en un premier point de livraison raccordé à un système d'eau chaude sanitaire non électrique,
- la figure 2B représente de manière schématique un deuxième exemple d'une série de valeurs de puissance électrique moyenne consommée mesurées en un deuxième point de livraison raccordé à un système d'eau chaude sanitaire électrique non asservi,
- la figure 2C représente de manière schématique un troisième exemple d'une série de valeurs de puissance électrique moyenne consommée mesurées en un troisième point de livraison raccordé à un système d'eau chaude sanitaire électrique asservi,
- la figure 3 représente de manière schématique des étapes d'un procédé de classification de systèmes d'eau chaude sanitaire à partir de séries temporelles de valeurs de puissance électrique moyenne consommée,

- la figure 4 représente de manière schématique une architecture d'un modèle permettant de générer un classificateur de systèmes d'eau chaude sanitaire à partir de séries temporelles de valeurs de puissance électrique moyenne consommée,
- la figure 5 représente de manière schématique une architecture d'un classificateur pour classifier des systèmes d'eau chaude sanitaire, le classificateur ayant été généré grâce au modèle de la figure 4.

## DESCRIPTION DETAILLEE D'UN MODE DE REALISATION

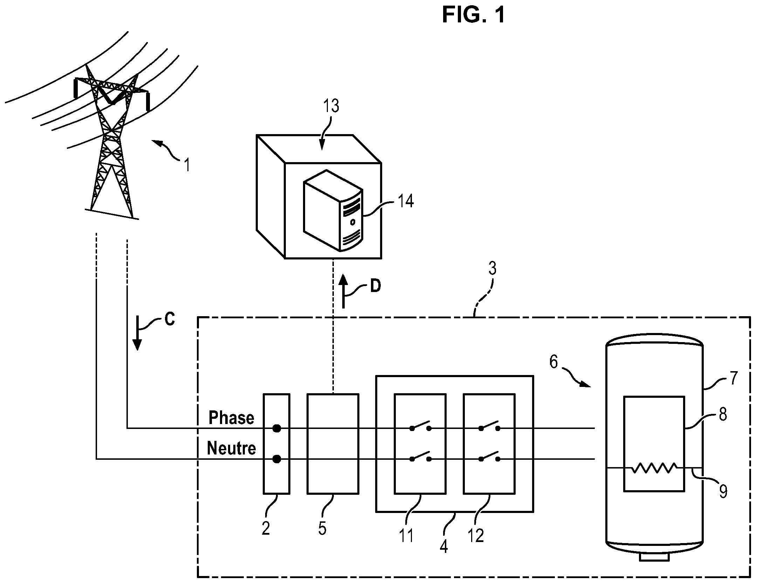

Sur la figure 1, le réseau de distribution d'énergie électrique 1 est relié à une pluralité de points de livraison. Un seul point de livraison 2 est représenté sur la figure 1.

Dans l'exemple illustré sur la figure 1, le point de livraison 2 est situé dans une installation 3, telle que par exemple un bâtiment abritant un logement.

L'installation 3 comprend des équipements électriques, un tableau électrique 4 permettant de raccorder l'ensemble des équipements électriques au réseau de distribution d'énergie électrique 1, et un compteur électrique 5 propre à mesurer une puissance électrique consommée au cours du temps, par l'ensemble des équipements électriques de l'installation.

Dans l'exemple illustré sur la figure 1, les équipements électriques comprennent un système d'eau chaude sanitaire électrique 6. Le système d'eau chaude sanitaire électrique 6 comprend un chauffe-eau électrique 7. Le chauffe-eau électrique 7 comprend un réservoir 8 propre à contenir de l'eau et une résistance 9 qui, lorsqu'elle est alimentée par un courant électrique, chauffe l'eau contenue dans le réservoir 8.

Le tableau électrique 4 comprend un disjoncteur électrique 11 propre à couper l'alimentation en énergie électrique du chauffe-eau 7 lorsque l'intensité du courant électrique alimentant le chauffe-eau 7 dépasse un certain seuil, assurant ainsi une protection du système d'eau chaude sanitaire 6.

Dans l'exemple illustré sur la figure 1, le système d'eau chaude sanitaire électrique 6 est un système d'eau chaude sanitaire électrique asservi.

Ainsi, le système d'eau chaude sanitaire comprend un contacteur 12 (généralement appelé « contacteur jour/nuit ») qui est raccordé au tableau électrique 4, en série avec le disjoncteur électrique 11.

Le contacteur 12 est propre à sélectivement activer et désactiver l'alimentation en énergie électrique du chauffe-eau 7 en fonction d'un signal de commande C (généralement appelé « signal heures creuses »). Le signal de commande C est un signal électrique émis par le gestionnaire du réseau de distribution d'énergie électrique et se propageant sur le réseau de distribution d'énergie électrique 1. Le signal de commande C est par exemple constitué d'impulsions électriques à une fréquence de 75 Hz.

Le contacteur 12 est prévu pour pouvoir être positionné sélectivement dans trois positions :

- une première position (généralement appelée « position 0 » ou « position OFF ») dans laquelle le chauffe-eau 7 n'est pas alimenté en énergie électrique,
- une deuxième position (généralement appelée « position auto ») dans laquelle le contacteur 12 commande une alimentation en énergie électrique du chauffe-eau 7 uniquement pendant les heures creuses, c'est-à-dire dès que le contacteur détecte le signal de commande C, et
- une troisième position (généralement appelée « position 1 » ou « position ON ») dans laquelle le contacteur 12 commande une alimentation du chauffe-eau en énergie électrique pour chauffer l'eau, en permanence, y compris pendant les heures pleines.

Dans l'exemple illustré sur la figure 1, le compteur électrique 2 est un compteur électrique communicant.

Ainsi, le compteur électrique 2 est propre à communiquer avec un centre de collecte de données distant 13. A cet effet, le compteur électrique 5 est propre à générer un signal D contenant des données relatives à la consommation d'énergie électrique mesurée au point de livraison 2. Le signal D généré peut être par exemple transmis par le compteur électrique 5 au centre de collecte de données 13, sous la forme de courants porteurs en ligne (CPL) qui se propagent sur le réseau de distribution électrique 1.

Les données relatives à la consommation d'énergie électrique qui sont transmises par le compteur électrique communicant 5 au centre de collecte 12 comprennent un identifiant du point de livraison 2 et des valeurs de puissance électrique moyenne consommée mesurées au point de livraison, chaque valeur de puissance électrique moyenne consommée mesurée étant associée à une date et une plage horaire de consommation.

Chaque valeur de puissance électrique moyenne est typiquement une moyenne de la puissance électrique consommée au point de livraison 2 pendant une durée fixe prédéfinie, par exemple pendant une demi-heure.

Ainsi, les valeurs de puissance électrique moyennes sont mesurées avec un pas de temps d'une demi-heure entre deux valeurs consécutives.

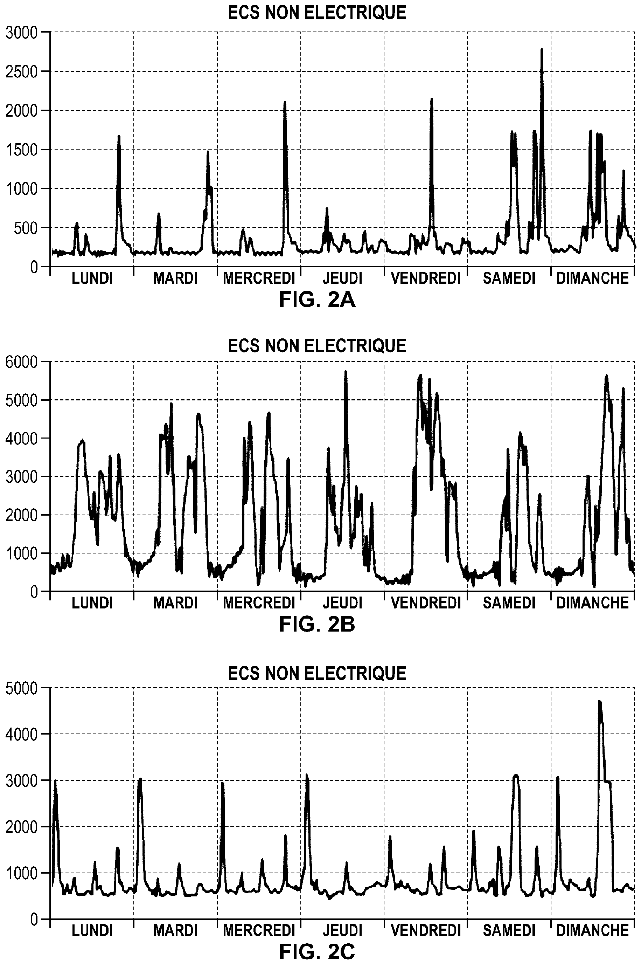

La figure 2A représente de manière schématique une première série de valeurs de puissance électrique moyenne consommée mesurées en un premier point de livraison raccordé à une installation équipée d'un système d'eau chaude sanitaire non électrique.

Dans ce premier exemple, la série de valeurs de puissance électrique moyenne s'étale sur une semaine, depuis le lundi à 00 heure 00 minute, jusqu'au dimanche à 23 heures 30. La série comprend ainsi 7 x 48 = 336 valeurs de puissance électrique moyenne, chaque valeur de puissance électrique moyenne étant associée à une date et à une plage horaire de la journée (la plage horaire ayant une durée d'une demi-heure).

Par convention sur les figures 2A à 2C, la plage horaire allant de 00 heure 00 minute à 00 heures 30 minutes, est identifiée par son heure de début, à savoir : 00 heure 00 minute. De même, la plage horaire suivante allant de 00 heure 30 minutes à 01 heure 00 minute est identifiée par l'heure de début, à savoir : 00 heure 30 minutes, et ainsi de suite. Autrement dit, chaque plage horaire est identifiée par son heure de début. Bien entendu, il serait possible d'identifier les plages horaires de manière différente. Par exemple, il serait possible d'identifier chaque plage horaire par un indice t pouvant prendre une valeur entière, par exemple une valeur entière allant de 1 à 48 (dans le cas d'un pas de temps égal à 30 minutes entre deux plages horaires consécutives).

La figure 2B représente de manière schématique une deuxième série de valeurs de puissance électrique moyenne consommée mesurées en un deuxième point de livraison raccordé à une installation équipée d'un système d'eau chaude sanitaire électrique non asservi.

Comme dans le premier exemple, dans ce deuxième exemple, la deuxième série comprend 7 x 48 = 336 valeurs de puissance électrique moyenne, chaque valeur de puissance électrique moyenne étant associée à une date et à une plage horaire de la journée.

La figure 2C représente de manière schématique une troisième série de valeurs de puissance électrique moyenne consommée mesurées en un troisième point de livraison raccordé à une installation équipée d'un système d'eau chaude sanitaire électrique asservi, telle que celle qui est illustrée sur la figure 1.

Comme dans le premier exemple et dans le deuxième exemple, dans ce troisième exemple, la troisième série comprend ainsi 7 x 48 = 336 valeurs de puissance électrique moyenne, chaque valeur de puissance électrique moyenne étant associée à une date et à une plage horaire de la journée.

Dans ces exemples, la troisième série de valeurs de puissance électrique moyenne se distingue de la première série de valeurs et de la deuxième série de valeurs, par la présence de pics réguliers. Ces pics réguliers apparaissent notamment la nuit. Ces pics se produisent aux plages horaires qui coïncident avec les heures creuses, pendant lesquelles le chauffe-eau est activé par le contacteur.

De plus, en général, les utilisateurs qui disposent d'un système d'eau chaude sanitaire électrique non asservi ont une consommation d'énergie électrique plus intense et plus imprévisible que les utilisateurs qui disposent d'un système d'eau chaude sanitaire non-électrique.

Toutefois, il existe des cas dans lesquels il peut s'avérer plus difficile de distinguer, à partir de séries de valeurs de puissance électrique moyenne, un point de livraison raccordé à une installation équipée d'un système d'eau chaude sanitaire non-électrique d'un point de livraison raccordé à une installation équipé d'un système d'eau chaude sanitaire électrique non-asservi.

En effet, certains utilisateurs qui disposent d'un système d'eau chaude sanitaire non-électrique, utilisent également d'autres équipements électriques fortement consommateurs d'énergie électrique. C'est pourquoi, une installation équipée d'un système d'eau chaude sanitaire non-électrique peut être confondue avec une installation équipée d'un système d'eau chaude sanitaire électrique non-asservi, et inversement.

Sur la figure 1, le centre de collecte distant 13 comprend un module de traitement de données 14. Le module de traitement de données comprend un classificateur configuré pour, à partir des données reçues par le module de traitement de données 14 en provenance des compteurs communicants 5, mettre en oeuvre un procédé de classification pour classer les points de livraison 2 associés.

En pratique, l'unité de traitement de données 14 comprend un ou plusieurs processeur(s) et le classificateur prend la forme d'un programme de classification adapté pour être exécuté par au moins un des processeurs de l'unité de traitement de données 14. L'unité de traitement de données 14 comprend ou est couplée à une mémoire dans laquelle est enregistré le programme de classification et le cas échéant, des données manipulées par le programme (données d'entrée du programme, ou données de sortie générées par le programme).

En variante, le classificateur est un dispositif qui comprend au moins l'un des processeurs précités.

Lorsqu'il est exécuté, le classificateur est capable, à partir d'une série temporelle de valeurs de puissance électrique moyenne consommée mesurées à un point de livraison , de classer le point de livraison dans une seule classe parmi les trois classes suivantes :

- une première classe regroupant les systèmes d'eau chaude sanitaire non-électriques,
- une deuxième classe regroupant les systèmes d'eau chaude sanitaire électriques non-asservis par un signal de pilotage transmis par le réseau de distribution électrique au point de livraison, et
- une troisième classe regroupant les systèmes d'eau chaude sanitaire électrique asservis par un signal de pilotage transmis par le réseau de distribution électrique au point de livraison.

Plus précisément, le classificateur peut recevoir, en entrée, les données suivantes :

- des données relatives au point de livraison, telles que par exemple un nombre de postes horosaisonniers, un type de contrat souscrit (qui indique notamment si un fonctionnement asservi est possible le weekend), et un niveau de puissance électrique souscrit (c'est-à-dire une valeur maximale de la puissance électrique qui peut être délivrée par le réseau de distribution électrique au point de livraison, par exemple 3 kVA (kilovoltampère), 6 kVA, 9 kVA, 12 kVA, 15 à 36 kVA), et
- un relevé de valeurs de puissance électrique moyenne consommée mesurées au point de livraison sur une période de temps donnée (par exemple pendant 6 mois).

Les données relatives au point de livraison peuvent être obtenues à partir de l'identifiant du point de livraison transmis par le compteur électrique communicant de l'installation raccordée au point de livraison.

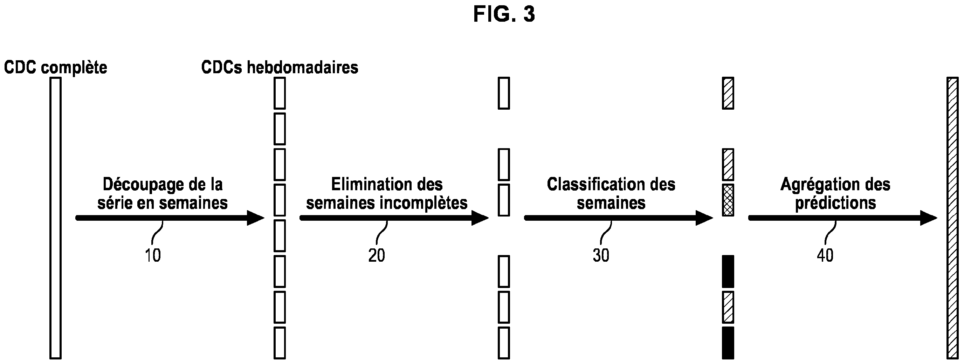

Comme illustré sur la figure 3, le classificateur peut exécuter les étapes suivantes :
Selon une première étape 10, les valeurs de puissance électrique moyenne consommée mesurées au point de livraison sont subdivisées en séries de de valeurs de puissance électrique moyenne consommée. Chaque série peut par exemple s'étaler sur une semaine complète et comprendre au maximum 336 valeurs de puissance électrique moyenne consommée, les valeurs étant espacées avec un pas de temps d'une demi-heure entre deux valeurs consécutives.

Selon une deuxième étape 20, les séries de valeurs incomplètes ou erronées sont éliminées. Par exemple une série de valeurs pour laquelle il manque plus de 6 valeurs consécutives de puissance électrique moyenne, correspondant à un trou de 3 heures est éliminée. Selon un autre exemple, une série de valeurs qui a été enregistrée au cours d'une semaine dont la durée n'est pas exactement de 168 heures, à cause d'un changement d'heure qui s'est produit au cours de la semaine, est éliminée. Selon un autre exemple encore, une semaine au cours desquels s'est produit un évènement particulier (par exemple une semaine qui inclut des vacances scolaires ou qui comporte un jour férié) est éliminée, car elle est moins représentative de la consommation habituelle d'énergie électrique au point de livraison.

Selon une troisième étape 30, chaque série temporelle de valeurs de puissance électrique consommée mesurées au point de livraison est classée.

A cet effet, le classificateur met en oeuvre :

- une sous-étape d'encodage, au moyen d'une fonction d'encodage qui associe à chaque série temporelle, une représentation compressée de la série temporelle, et
- une sous-étape de classification, au moyen d'une combinaison d'arbres de décision, qui attribue à chaque représentation compressée de la série temporelle, une classe unique parmi les trois classes mentionnées précédemment (système d'eau chaude sanitaire non-électrique, système d'eau chaude sanitaire électrique non-asservi, systèmes d'eau chaude sanitaire électrique asservi), ainsi qu'une valeur d'indice de confiance associée à la classe attribuée.

La troisième étape 30 conduit potentiellement à l'obtention d'une pluralité de classes qui peuvent être identiques ou différentes, ces classes ayant été attribuées à un même point de livraison.

Selon une quatrième étape 40, une classe finale est sélectionnée en fonction des différentes classes attribuées au point de livraison et des valeurs d'indice de confiance associées aux différentes classes attribuées à l'étape 30.

Par exemple, la classe finale sélectionnée peut être obtenue par un vote à partir d'un sous-ensemble de l'ensemble de classes obtenues à l'issue de la troisième étape 30, le sous-ensemble de classes regroupant uniquement les classes qui présentent les valeurs d'indice de confiance les plus élevés.

Le sous-ensemble de classes peut regrouper un nombre prédéfini de classes, par exemple le sous-ensemble de classes peut être constitué des 7 classes qui présentent les valeurs d'indice de confiance les plus élevées.

La classe finale attribuée au point de livraison est par exemple la classe majoritaire parmi les classes du sous-ensemble de classes.

S'il n'est pas possible de déterminer une classe majoritaire parmi les classes du sous-ensemble de classes, alors la classe qui présente la valeur d'indice de confiance la plus faible parmi les classes du sous-ensemble de classes est éliminée, et le vote est renouvelé.

S'il n'est à nouveau pas possible de déterminer une classe majoritaire, alors il est procédé à une nouvelle élimination et à un nouveau vote, et ce jusqu'à ce qu'une classe majoritaire puisse être déterminée.

Le procédé de classement qui précède permet d'attribuer à chaque point de livraison une classe unique parmi les trois classes mentionnées précédemment (système d'eau chaude sanitaire non-électrique, système d'eau chaude sanitaire électrique non-asservi, systèmes d'eau chaude sanitaire électrique asservi).

Lorsque la classe attribuée au point de livraison est la deuxième classe (système d'eau chaude sanitaire électrique non-asservi), des démarches peuvent ensuite être entreprises pour détecter les raisons pour lesquelles le système d'eau chaude sanitaire électrique n'est pas asservi au signal de commande émis par le gestionnaire du réseau de distribution. En effet, l'absence d'asservissement peut être due à un dysfonctionnement du contacteur ou encore à une impossibilité de brancher le contacteur. Dans ce cas, des opérations de maintenance ou de réparation peuvent permettre de rétablir l'asservissement.

Dans cet exemple, les données d'entrée du classificateur comprennent un relevé de valeurs de puissance électrique moyenne consommée mesurées au point de livraison sur une période de temps donnée. Cette période de temps peut être égale à 1 semaine. Dans ce cas, il n'est pas nécessaire de réaliser les étapes 10, 20 et 40. En effet, le procédé de classification proposé peut être exécuté à partir de données de consommation disponibles sur une seule semaine complète (par exemple des données de consommation allant de lundi 00 heure 00 minutes à dimanche 23 heures 30 minutes).

Le classificateur inclus dans le module de traitement de données 14 a été généré au préalable lors d'une phase d'apprentissage, grâce à un ensemble de données d'apprentissage.

L'ensemble de données d'apprentissage comprend une pluralité d'exemples issus de données collectées par des compteurs électrique communicants d'une pluralité de points de livraison de référence. Chaque exemple comprend, pour un point de livraison donné, une série temporelle de valeurs de puissance électrique moyenne consommée mesurées au point de livraison de référence, chaque valeur de puissance électrique moyenne consommée mesurée étant associée à une date et une plage horaire de consommation, et à une valeur connue d'une classe à laquelle appartient le système d'eau chaude sanitaire raccordé au point de livraison.

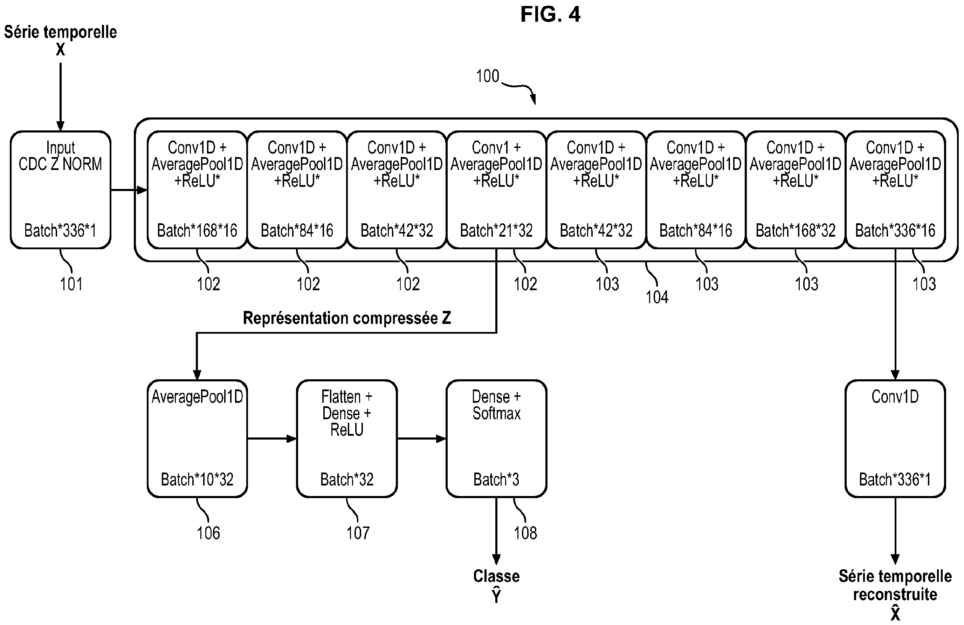

La figure 4 représente de manière schématique une architecture d'un modèle 100 permettant de générer le classificateur des points de livraison à partir de l'ensemble de données d'apprentissage.

Le modèle 100 représenté comprend une pluralité de cellules. Chaque cellule comprend un réseau de neurone configuré pour exécuter une tâche prédéfinie.

Le modèle 100 est prévu pour recevoir en entrée une série temporelle de valeurs de puissance électrique moyenne consommée X mesurées à un point de livraison et pour générer en sortie une valeur de classe associée à la série temporelle $\hat{Y}$.

Dans cet exemple, la série temporelle X est constituées de 336 valeurs (correspondant aux valeurs de puissances moyennes mesurées sur une semaine, avec un pas d'une demi-heure entre deux valeurs consécutives).

Le modèle 100 comprend une couche d'entrée (« Input CDC Z NORM ») 101 ayant pour fonction de recevoir la série temporelle.

La série temporelle peut avoir été normalisée au préalable par exemple par une normalisation standard (parfois appelée « z-normalisation ») qui consiste à centrer et réduire la série temporelle. Autrement dit, la série temporelle normalisée est obtenue en retranchant à chaque valeur de la série temporelle une moyenne des valeurs de la série temporelle puis en divisant chaque valeur obtenue par un écart-type des valeurs de la série temporelle :

$$x_{t\,norm} = \frac{x_t - \mu}{\sigma}$$

où $x_{t\,norm}$ est une valeur normalisée de de la valeur $x_t$ de la série temporelle, $x_t$ est la valeur de la série temporelle mesurée à la date et dans la plage horaire $t$, $\mu$ est la moyenne des valeurs de la série temporelle et $\sigma$ est l'écart-type des valeurs de la série temporelle.

Cette normalisation permet d'obtenir des activations de la première couche qui soient suffisamment proche de 0, ce qui permet un meilleur entraînement des réseaux de neurones, tout en obligeant ces réseaux à se focaliser sur une forme de la série temporelle plutôt que sur une amplitude de la série temporelle.

Le modèle comprend en outre une série de cellules d'encodage (« Conv1D + AveragePool1D + ReLU ») 102 et une série de cellules de décodage (« Unsampling 1D + Conv1D + ReLU ») 103. Les cellules d'encodage 102 et les cellules de décodage 103 forment ensemble un auto-encodeur convolutif 104.

La série de cellules d'encodage 102 a pour fonction de réduire la taille de la série temporelle normalisée en sortie de la cellule de normalisation 101. Les cellules d'encodage 102 permettent de générer une représentation compressée de la série temporelle de valeurs de puissance consommée. Dans cet exemple, la représentation compressée est constituée de 21 valeurs.

La série de cellules de décodage 103 a pour fonction d'augmenter la taille de la représentation compressée afin de générer une pluralité de représentations décompressées de la série temporelle de valeurs de puissance consommée. Dans cet exemple, la représentation décompressée est constituée de 16 séries temporelles de 336 valeurs chacune.

Le modèle 100 comprend en outre une cellule de reconstruction (« Conv1D ») 105 ayant pour fonction de générer une série temporelle de valeurs de puissance consommée reconstruite, à partir des 16 séries temporelles décompressée.

Par ailleurs, le modèle 100 comprend une cellule supplémentaire d'encodage (« AveragePool1D ») 106 ayant pour fonction de réduire encore la taille de la représentation compressée, et une cellule d'étalement (« Flatten + Dense + ReLU ») 107 ayant pour fonction de mettre à plat les valeurs de la représentation compressée réduite.

« Flatten » est une couche réalisant une opération élémentaire ayant pour effet « d'aplatir » le tenseur de taille Batch*10*32 sur chacun de ses 32 canaux pour en faire un vecteur de taille Batch*320.

« Dense » est une couche réalisant une opération élémentaire consistant en l'ajout de connexions avec l'ensemble des neurones de la couche précédente. Les 320 activations de la couche précédente sont connectées à 32 activations de la couche suivante.

« ReLU » est une couche appliquant une fonction d'activation non linéaire par laquelle passent les données issues de la couche « Dense ». L'application de la fonction d'activation ne modifie pas la structure des données.

Enfin, le modèle 100 comprend une cellule de classification (« Dense +° Softmax ») 108 ayant pour fonction d'associer à la représentation compressée réduite, une valeur de classe estimée $\hat{Y}$.

Le modèle 100 est entrainé à l'aide des exemples formant les données d'apprentissage.

En particulier, les paramètres de la fonction d'encodage, de la fonction de décodage et de la fonction de classification sont mis à jour.

Plus précisément, pour chaque exemple $(X, Y)$, les poids des neurones des couches neuronales de l'ensemble des cellules du modèle 100 sont mis à jour, en fonction d'une première erreur $Y - \hat{Y}$ entre la valeur estimée $\hat{Y}$ de la classe à laquelle appartient le système d'eau chaude sanitaire du point de livraison et la valeur réelle $Y$ de la classe à laquelle appartient le système d'eau chaude sanitaire du point de livraison, et d'une deuxième erreur $X - \hat{X}$ entre la série temporelle de valeurs de puissance moyenne consommée reconstruite $X$ et la série de valeurs de puissance moyenne consommée $\hat{X}$ mesurées au point de livraison.

Une fois la phase d'apprentissage terminée, la cellule de classification 108 est remplacée par un arbre de décision ou une combinaison d'arbres de décision 109.

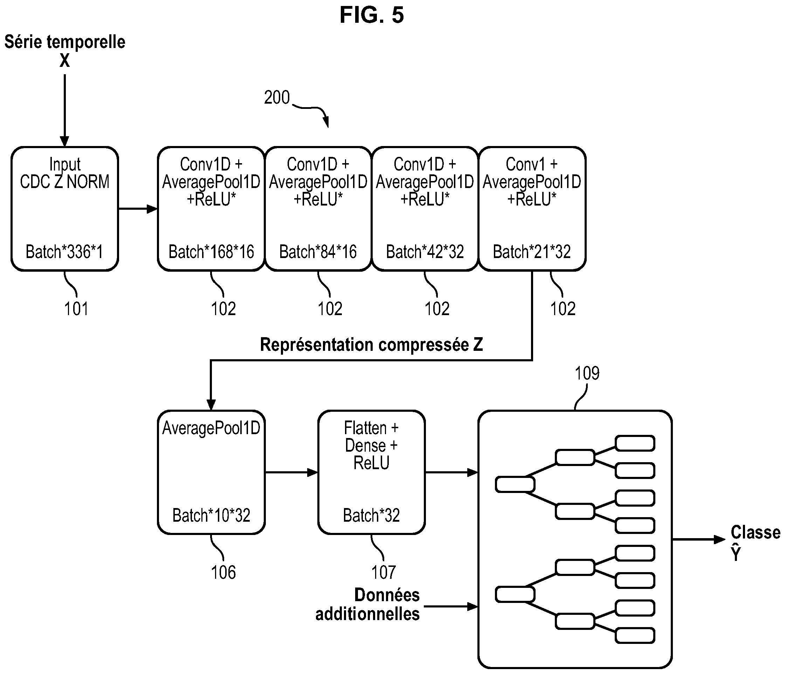

La figure 5 représente de manière schématique une architecture du classificateur 200 obtenu.

L'arbre de décision ou la combinaison d'arbres de décision 109 reçoit en entrée, non seulement une représentation réduite de la série temporelle de valeurs de puissance électrique consommée mesurées au point de livraison générée par la fonction d'encodage, mais également des données additionnelles.

Ces données additionnelles peuvent comprendre :

- des données relatives au point de livraison, et/ou
- une ou plusieurs valeur(s) caractéristique(s) calculée(s) à partir de la série temporelle de valeurs de puissance électrique consommée mesurées au point de livraison.

Les données relatives au point de livraison peuvent inclure :

- un nombre de postes horosaisonniers du point de livraison, et/ou
- une valeur de puissance électrique maximale pouvant être fournie par le réseau de distribution électrique au point de livraison.

Les données relatives au point de livraison peuvent être obtenues à partir de l'identifiant du point de livraison transmis par le compteur électrique communicant de l'installation raccordée au point de livraison.

Les valeurs caractéristiques calculées à partir de la série temporelle peuvent comprendre :

- un identifiant du mois de l'année associé à la série temporelle de valeurs de puissance électrique, et/ou
- une valeur d'écart-type, une valeur moyenne, une valeur médiane, une valeur de quartile d'ordre 1, une valeur de quartile d'ordre 3, une valeur de décile d'ordre 1, une valeur de décile d'ordre 9, une valeur maximale, une valeur minimale, une valeur de coefficient de variation, une valeur de coefficient d'asymétrie, une valeur de coefficient d'aplatissement, une différence entre la valeur absolue de la valeur maximale et la valeur absolue de la valeur minimale, une valeur de rapport entre la valeur moyenne et la valeur maximale, et/ou des valeurs moyennes robustes de la série temporelle de valeurs de puissance électrique, et/ou
- une valeur d'écart-type, une valeur moyenne, une valeur médiane, une valeur de quartile d'ordre 1, une valeur de quartile d'ordre 3, une valeur de décile d'ordre 1, une valeur de décile d'ordre 9, une valeur maximale, une valeur minimale, une valeur de coefficient de variation, une valeur de coefficient d'asymétrie, une valeur de coefficient d'aplatissement, une différence entre la valeur absolue de la valeur maximale et la valeur absolue de la valeur minimale, une valeur de rapport entre la valeur moyenne et la valeur maximale, et/ou des valeurs moyennes robustes d'une série temporelle dérivée de valeurs de puissance électrique, chaque valeur de la série temporelle dérivée étant associée à une date et une plage horaire de consommation, et étant obtenue comme une différence entre la valeur de puissance électrique moyenne consommée mesurée associée à la date et à la plage horaire, et une valeur de puissance électrique moyenne consommée mesurée associée à une date et une plage horaire antérieure qui précède immédiatement la plage horaire, et/ou
- des valeurs de coefficients d'une fonction d'auto-corrélation partielle de la série temporelle de valeurs de puissance électrique.

Les valeurs moyennes robustes d'une série temporelle sont définies de la manière suivante :

$$x_t^{rlm} = \underset{x_t}{\operatorname{argmin}} \sum_{j=0}^{6} h_\delta(x_t, x_{t+j \times N})$$

$$h_\delta(x, y) = \begin{cases} \frac{1}{2}(x - y)^2, pour\ |x - y| \leq \delta \\ \delta \times \left(|x - y| - \frac{1}{2}\delta\right) sinon \end{cases}$$

où $x_t^{rlm}$ est une valeur moyenne robuste pour la plage horaire $t$, $j$ est un indice désignant le jour de la semaine, dans cet exemple $j$ peut prendre une valeur entière allant de 0 à 6, $t$ est un indice désignant la plage horaire, dans cet exemple $t$ peut prendre une valeur entière allant de 1 à 48, $N$ est le nombre total de plages horaires dans une journée, dans cet exemple $N$ = 48, $h_\delta$ est une fonction de perte, qui dans cette exemple est une fonction de perte de Huber.

Dans cet exemple, le nombre de valeurs moyennes robustes obtenu est de $N$, c'est-à-dire 48, avec un pas de 30 minutes entre deux valeurs moyennes robustes consécutives. Ces valeurs moyennes robustes sont représentatives d'un schéma de consommation type au cours d'une journée.

L'arbre de décision ou la combinaison d'arbres de décision 109 est obtenu à partir d'un modèle dont l'apprentissage est un apprentissage à renforcement de gradient, tel que le modèle connu sous la dénomination LightGBM.

L'arbre de décision 109 ou la combinaison d'arbres de décision 109 est configuré pour générer en sortie une valeur de classe ($\hat{Y}$) attribuée au système d'eau chaude sanitaire raccordé au point de livraison en fonction de la représentation réduite de la série temporelle de valeurs de puissance électrique consommée mesurées au point de livraison, et des données additionnelles.

De plus, l'arbre de décision 109 est également configurer pour générer une valeur d'indice de confiance ($\varepsilon$) associée à la classe attribuée au système d'eau chaude sanitaire.

## EXEMPLE

Un exemple de classificateur a été obtenu par le procédé décrit précédemment. Les données d'apprentissage ont été obtenues à partir de 1059 points de livraison, ayant fourni 65 306 semaines d'observations. De plus, des données de validation obtenues à partir de 205 points de livraison ayant fourni 15 818 semaines d'observation ont été utilisées pour limiter le risque de surapprentissage du classificateur.

Les hyperparamètres utilisés pour le modèle LightGBM sous-jacent sont les suivants :

- Nombre de feuilles maximum : 31,
- Profondeur maximum des arbres de décision : 12,
- Taux d'apprentissage : 0,1,
- $\gamma$ : 0,00001,
- Scores minimums nécessaires dans un noeud fille : 0,001,
- Nombre minimum d'observations nécessaires dans un noeud fille : 5,
- Sous-échantillonnage des observations à chaque étape : 90% de l'échantillon,
- Sous-échantillonnage des colonnes à chaque étape : 75% des variables,
- $\alpha$ : 0,001,
- $\lambda$ : 0,01.

Puis, le classificateur obtenu a été utilisé sur un jeu de données de test afin d'évaluer les performances du classificateur. Les données de test ont été obtenues à partir de mesures réalisées au niveau de 553 points de livraisons, ayant fourni 42 722 semaines d'observations.

Le classificateur a permis d'obtenir les performances illustrées par la matrice de confusion suivante :

| Prédiction / Réalité | ECS non électrique | ECS électrique non asservi | ECS électrique asservi |
|---|---|---|---|
| ECS non électrique | 35,04% | 3,83% | 3,10% |
| ECS électrique non asservi | 6,57% | 10,40% | 0,55% |
| ECS électrique asservi | 0,00% | 0,55% | 39,96% |

il peut être constaté que le classificateur obtenu permet de détecter les points de livraison reliés à des systèmes d'eau chaude sanitaire non asservi avec un niveau de précision élevé.

**Revendications**

1. Procédé de génération d'un classificateur (200) pour classifier un système d'eau chaude sanitaire (6) raccordé à un point de livraison (2) d'un réseau de distribution électrique (1),

le procédé de génération étant mise en oeuvre à partir d'un ensemble de données d'apprentissage comprenant une pluralité d'exemples, chaque exemple comprenant, pour un point de livraison donné, une série temporelle de valeurs de puissance électrique moyenne consommée ($X$) mesurées au point de livraison, chaque valeur de puissance électrique moyenne consommée mesurée étant associée à une date et une plage horaire de consommation, et une valeur connue ($Y$) d'une classe à laquelle appartient le système d'eau chaude sanitaire (6) du point de livraison,
le procédé comprenant des étapes de :

- générer une fonction d'encodage (102) associant à chaque série temporelle de valeurs de puissance électrique consommée ($X$) mesurées, une représentation compressée ($Z$) de la série temporelle de valeurs de puissance électrique,
- générer une fonction de classification (108) associant à chaque représentation compressée ($Z$), une valeur estimée ($\hat{Y}$) de la classe à laquelle appartient le système d'eau chaude sanitaire (6) du point de livraison (2),
- générer une fonction de décodage (103) associant à chaque représentation compressée ($Z$), une série temporelle de valeurs de puissance consommée reconstruite ($\hat{X}$),
- mettre à jour des paramètres de la fonction d'encodage (102) en fonction d'une première erreur ($Y - \hat{Y}$) entre la valeur estimée ($\hat{Y}$) de la classe à laquelle appartient le système d'eau chaude sanitaire (6) du point de livraison (2) et la valeur connue ($Y$) de la classe à laquelle appartient le système d'eau chaude sanitaire (6) du point de livraison (2), et d'une deuxième erreur ($X - \hat{X}$) entre la série temporelle de valeurs de puissance moyenne consommée reconstruite ($\hat{X}$) et la série de valeurs de puissance moyenne consommée mesurées ($X$) au point de livraison (2), et
- générer un arbre de décision ou une combinaison d'arbres de décision (109) propre(s) à attribuer une classe à un système d'eau chaude sanitaire raccordé à un point de livraison du réseau de distribution électrique en fonction d'une représentation compressée d'une série temporelle de valeurs de puissance électrique consommée mesurées au point de livraison, la représentation compressée ayant été obtenue par la fonction d'encodage à partir d'une série temporelle de valeurs de puissance électrique consommée mesurées au point de livraison.

2. Procédé selon la revendication 1, comprenant en outre une étape de mettre à jour des paramètres de la fonction de décodage (103), qui est exécutée simultanément à l'étape de mettre à jour les paramètres de la fonction d'encodage (102).

3. Procédé selon l'une des revendications 1 et 2, comprenant en outre une étape de mettre à jour des paramètres de la fonction de classification (108), qui est exécutée simultanément à l'étape de mettre à jour les paramètre de la fonction d'encodage (102).

4. Procédé selon l'une des revendications 1 à 3, dans lequel la classe à laquelle appartient le système d'eau chaude sanitaire du point de livraison est sélectionnée parmi :

- une première classe regroupant les systèmes d'eau chaude sanitaire non-électriques,
- une deuxième classe regroupant les systèmes d'eau chaude sanitaire électriques non-asservis par un signal de pilotage transmis par le réseau de distribution électrique au point de livraison, et
- une troisième classe regroupant les systèmes d'eau chaude sanitaire électrique asservis par un signal de pilotage transmis par le réseau de distribution électrique au point de livraison.

5. Procédé selon l'une des revendications 1 à 4, dans lequel l'arbre de décision ou la combinaison d'arbres de décision (109) est propre à attribuer une classe à un système d'eau chaude sanitaire raccordé à un point de livraison du réseau de distribution électrique, en fonction d'une représentation compressée ($Z$) de la série temporelle de valeurs de puissance électrique consommée mesurées au point de livraison générée par la fonction d'encodage, et d'une ou plusieurs valeurs caractéristiques calculées à partir de la série temporelle de valeurs de puissance électrique consommée mesurées ($X$) au point de livraison.

6. Procédé selon la revendication 5, dans lequel la ou les valeur(s) caractéristique(s) est(sont) choisie(s) parmi :

- un nombre de postes horosaisonniers du point de livraison, et/ou
- une valeur de puissance électrique maximale pouvant être fournie par le réseau de distribution électrique au point de livraison, et/ou
- un identifiant du mois de l'année associé à la série temporelle de valeurs de puissance électrique, et/ou
- une valeur d'écart-type, une valeur moyenne, une valeur médiane, une valeur de quartile d'ordre 1, une valeur de quartile d'ordre 3, une valeur de décile d'ordre 1, une valeur de décile d'ordre 9, une valeur maximale, une valeur minimale, une valeur de coefficient de variation, une valeur de coefficient d'asymétrie, une valeur de coefficient d'aplatissement, une différence entre la valeur absolue de la valeur maximale et la valeur absolue de la valeur minimale, une valeur de rapport entre la valeur moyenne et la valeur maximale, et/ou des valeurs moyennes robustes de la série temporelle de valeurs de puissance électrique, et/ou
- une valeur d'écart-type, une valeur moyenne, une valeur médiane, une valeur de quartile d'ordre 1, une valeur de quartile d'ordre 3, une valeur de décile d'ordre 1, une valeur de décile d'ordre 9, une valeur maximale, une valeur minimale, une valeur de coefficient de variation, une valeur de coefficient d'asymétrie, une valeur de coefficient d'aplatissement, une différence entre la valeur absolue de la valeur maximale et la valeur absolue de la valeur minimale, une valeur de rapport entre la valeur moyenne et la valeur maximale, et/ou des valeurs moyennes robustes d'une série temporelle dérivée de valeurs de puissance électrique, chaque valeur de la série temporelle dérivée étant associée à une date et une plage horaire de consommation, et étant obtenue comme une différence entre la valeur de puissance électrique moyenne consommée mesurée associée à la date et à la plage horaire, et une valeur de puissance électrique moyenne consommée mesurée associée à une date et une plage horaire antérieure qui précède immédiatement la plage horaire, et/ou
- des valeurs de coefficients d'une fonction d'auto-corrélation partielle de la série temporelle de valeurs de puissance électrique.

7. Procédé selon l'une des revendications 1 à 6, dans lequel le classificateur (200) est également propre à calculer une valeur d'indice de confiance ($\varepsilon$) associée à la classe attribuée au système d'eau chaude sanitaire.

8. Procédé selon l'une des revendications 1 à 7, dans lequel le classificateur (200) est propre à attribuer plusieurs classes à un même système d'eau chaude sanitaire d'un point de livraison à partir de plusieurs séries temporelles de valeurs de puissance électrique consommée mesurées au point de point de livraison, et à sélectionner une classe finale en fonction des différentes classes attribuées au système d'eau chaude sanitaire.

9. Procédé selon les revendications 7 et 8, dans lequel le classificateur (200) sélectionne la classe finale en fonction des valeurs d'indice de confiance ($\varepsilon$) associées aux différentes classes attribuées au système d'eau chaude sanitaire.

10. Procédé selon l'une des revendications 1 à 9, dans lequel chaque série temporelle de valeurs de puissance électrique ($X$) comprend une pluralité de valeurs de puissance électrique espacées avec un pas de temps de 30 minutes entre deux valeurs de de puissance électrique successives, sur une durée de 7 jours.

**11.** Procédé selon l'une des revendications 1 à 10, dans lequel l'arbre de décision ou la combinaison d'arbres de décision (109) est généré par un apprentissage automatique à renforcement de gradient.

**12.** Procédé selon l'une des revendications 1 à 11, comprenant des étapes préalables de :

- collecter pour chaque point de livraison, une série temporelle de valeurs de puissance électrique moyenne consommée mesurées au point de livraison, et
- transmettre les valeurs de puissance électrique moyenne consommée mesurées à un centre de collecte de données.

**13.** Produit programme d'ordinateur comprenant des instructions de code de programme pour l'exécution des étapes du procédé selon l'une des revendications 1 à 12, lorsque ce programme est exécuté par un ordinateur.

**14.** Mémoire lisible par ordinateur stockant des instructions exécutables par l'ordinateur pour l'exécution des étapes du procédé selon l'une des revendications 1 à 12.

**15.** Classificateur (200) pour classifier un système d'eau chaude sanitaire (6) raccordé à un point de livraison (2) d'un réseau de distribution électrique (1), à partir d'une ou plusieurs série(s) temporelle(s) de valeurs de puissance électrique moyenne consommée ($X$) mesurées au point de livraison, chaque valeur de puissance électrique moyenne consommée mesurée étant associée à une date et une plage horaire de consommation, le classificateur (200) étant configuré pour :

- mettre en oeuvre une fonction d'encodage (102) associant à chaque série temporelle de valeurs de puissance électrique consommée ($X$) mesurées, une représentation compressée ($Z$) de la série temporelle de valeurs de puissance électrique, et
- attribuer une classe au système d'eau chaude sanitaire en fonction de la représentation compressée de la série temporelle de valeurs de puissance électrique consommée à l'aide d'un arbre de décision ou une combinaison d'arbres de décision (109).

FIG. 1

## ECS NON ELECTRIQUE

FIG. 2A

## ECS NON ELECTRIQUE

FIG. 2B

## ECS NON ELECTRIQUE

FIG. 2C

# FIG. 3

CDC complète     CDCs hebdomadaires

Découpage de la série en semaines    10

Elimination des semaines incomplètes    20

Classification des semaines    30

Agrégation des prédictions    40

EP 4 354 367 A1

**FIG. 4**

Série temporelle
X

100

Input
CDC Z NORM

Batch*336*1
101

Conv1D +
AveragePool1D
+ReLU*

Batch*168*16
102

Conv1D +
AveragePool1D
+ReLU*

Batch*84*16
102

Conv1D +
AveragePool1D
+ReLU*

Batch*42*32
102

Conv1 +
AveragePool1D
+ReLU*

Batch*21*32
102

Conv1D +
AveragePool1D
+ReLU*

Batch*42*32
103

Conv1D +
AveragePool1D
+ReLU*

Batch*84*16
103

Conv1D +
AveragePool1D
+ReLU*

Batch*168*32
103

Conv1D +
AveragePool1D
+ReLU*

Batch*336*16
103

104

Représentation compressée Z

AveragePool1D

Batch*10*32
106

Flatten +
Dense +
ReLU

Batch*32
107

Dense +
Softmax

Batch*3
108

Classe
Ŷ

Conv1D

Batch*336*1

Série temporelle
reconstruite
X̂

EP 4 354 367 A1

## FIG. 5

Série temporelle
X

200

| Input CDC Z NORM | Conv1D + AveragePool1D +ReLU* | Conv1D + AveragePool1D +ReLU* | Conv1D + AveragePool1D +ReLU* | Conv1 + AveragePool1D +ReLU* |
|---|---|---|---|---|
| Batch*336*1 | Batch*168*16 | Batch*84*16 | Batch*42*32 | Batch*21*32 |

101      102      102      102      102

Représentation compressée Z

109

| AveragePool1D | Flatten + Dense + ReLU |
|---|---|
| Batch*10*32 | Batch*32 |

106      107

Classe
Ŷ

Données
additionnelles

EP 4 354 367 A1

Europäisches
Patentamt

European
Patent Office

Office européen
des brevets

# RAPPORT DE RECHERCHE EUROPEENNE

Numéro de la demande

**EP 23 20 3629**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BREGERE MARGAUX ET AL: "Simulating Tariff Impact in Electrical Energy Consumption Profiles With Conditional Variational Autoencoders", IEEE ACCESS, IEEE, USA, vol. 8, 13 juillet 2020 (2020-07-13), pages 131949-131966, XP011800801, DOI: 10.1109/ACCESS.2020.3009060 | 1-3,5-15 | INV.<br>G06Q10/04<br>G06Q10/0631<br>G06Q50/06<br>F24D19/10<br>F24H15/144 |
| A | * abrégé *<br>* chapters I – V *<br>* Appendix D * | 4 | |
| A | PISCITELLI MARCO SAVINO ET AL: "Recognition and classification of typical load profiles in buildings with non-intrusive learning approach", APPLIED ENERGY, ELSEVIER SCIENCE PUBLISHERS, GB, vol. 255, 28 août 2019 (2019-08-28), XP085862626, ISSN: 0306-2619, DOI: 10.1016/J.APENERGY.2019.113727 [extrait le 2019-08-28]<br>* abrégé *<br>* Part 1 * | 1-15 | |
| A | ATWA Y M ET AL: "DSM Approach for Water Heater Control Strategy Utilizing Elman Neural Network", ELECTRICAL POWER CONFERENCE, 2007. EPC 2007. IEEE CANADA, IEEE, PISCATAWAY, NJ, USA, 25 octobre 2007 (2007-10-25), pages 382-386, XP031252734, ISBN: 978-1-4244-1444-4<br>* abrégé *<br>* chapters II – IV * | 1-15 | |

**DOMAINES TECHNIQUES RECHERCHES (IPC)**

G06Q

-/--

Le présent rapport a été établi pour toutes les revendications

| Lieu de la recherche | Date d'achèvement de la recherche | Examinateur |
|---|---|---|
| Munich | 22 février 2024 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 23 20 3629

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Mocanu Elena: "Machine Learning applied to Smart Grids", , 9 octobre 2017 (2017-10-09), pages 1-165, XP055907281, ISBN: 978-90-38-64338-0 Extrait de l'Internet: URL:https://pure.tue.nl/ws/files/77436888/ 20171009_Mocanu.pdf [extrait le 2022-03-30] * abrégé * ----- | 1,13-15 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 22 février 2024 | Dedek, Frédéric |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...........................................................................
& : membre de la même famille, document correspondant

EPO FORM 1503 03.82 (P04C02)